# EUROPÄISCHE PATENTANMELDUNG

(11) **EP 3 593 994 A2**
(43) Veröffentlichungstag der Anmeldung: **15.01.2020**
(21) Anmeldenummer: 19180039.0
(22) Anmeldetag: 13.06.2019
(51) Int. Cl.: B32B 17/10, F41H 5/04

(54) **VORRICHTUNG ZUM FLÄCHIGEN ABSTÜTZEN EINER GEKRÜMMTEN GLASSCHEIBE BEIM HERSTELLEN EINER GEKRÜMMTEN VERBUNDGLASSCHEIBE SOWIE VERBUNDGLASSCHEIBE**

(30) Priorität: 20.06.2018 DE 102018209938
(71) Anmelder: Haverkamp GmbH, 48165 Münster (DE)
(72) Erfinder: Haverkamp, Ulrich, 48149 Münster (DE)
(74) Vertreter: Rau, Schneck & Hübner Patentanwälte Rechtsanwälte PartGmbB

(57) **Zusammenfassung**

Eine Vorrichtung (1) zum flächigen Abstützen einer gekrümmten Glasscheibe (8) beim Herstellen einer gekrümmten Verbundglasscheibe (9) weist eine formflexible Unterlage (2) auf, die an die gekrümmte Glasscheibe (8) individuell anpassbar ist. Eine gekrümmte Verbundglasscheibe (9), die unter Verwendung der Vorrichtung (1) hergestellt werden kann, weist eine erste gekrümmte Glasscheibe (8), eine zweite gekrümmte Glasscheibe (11) und mindestens eine zwischen den Glasscheiben (8, 11) angeordnete Ausgleichsschicht (12) auf.

## Beschreibung

Die vorliegende Patentanmeldung nimmt die Priorität der deutschen Patentanmeldung DE 10 2018 209 938.3 in Anspruch, deren Inhalt durch Bezugnahme hierin aufgenommen wird.

Die Erfindung betrifft eine Vorrichtung zum flächigen Abstützen einer gekrümmten Glasscheibe beim Herstellen einer gekrümmten Verbundglasscheibe sowie eine Verbundglasscheibe, die insbesondere unter Verwendung einer derartigen Vorrichtung hergestellt worden ist.

Die WO 2018/095 693 A1 offenbart ein Verfahren zur Herstellung einer gebogenen Verbundglasscheibe aus mindestens einer chemisch vorgespannten Glasscheibe.

Die DE 10 2013 204 338 A1 offenbart eine Vorrichtung und ein Verfahren zur Herstellung von Verbundplatten mithilfe eines wiederverwendbaren Vakuumsacks.

Die DE 20 2009 009 173 U1 offenbart ein monolithisches Verbundsicherheitsglas.

Die DE 10 2011 117 340 A1 offenbart eine durchschusshemmende transparente Verbundscheibe.

Eine Verbundglasscheibe ist insbesondere ein einbruch- und/oder durchschusshemmendes Sicherheitsglas, das beispielsweise für Gebäude als ebenes, ungekrümmtes Verbundglas eingesetzt wird. Die Herstellung von ebenem Verbundglas kann mittels eines Autoklaven, im Foliensack-Verfahren und/oder in einem Verfahren unter bereichsweiser Aufbringung von Unterdruck, Überdruck und Wärme hergestellt werden. Die Herstellung einer gekrümmten Verbundglasscheibe mit diesen Verfahren ist aufwändig und fehleranfällig. Es muss insbesondere gewährleistet sein, dass die miteinander zu verbindenden gekrümmten Glasscheiben ideal zueinander korrespondierende Konturen aufweisen, um Glasbruch bei der Herstellung in Folge von Druckausübung auf die Glasscheiben zu verhindern. Der Aufwand für die Bereitstellung derart aneinander angepasster Glasscheiben ist hoch. Die Herstellung einer gekrümmten Verbundglasscheibe aus einem Pärchen mit Glasscheiben von ideal aufeinander abgestimmten Konturen ist unwirtschaftlich.

Es ist eine Aufgabe der vorliegenden Erfindung, die Herstellung einer gekrümmten Verbundglasscheibe derart zu vereinfachen, dass die Herstellung insbesondere fehlerunanfällig und wirtschaftlich profitabel möglich ist.

Diese Aufgabe ist erfindungsgemäß gelöst durch eine Vorrichtung mit den im Anspruch 1 angegebenen Merkmalen.

Erfindungsgemäß wurde erkannt, dass eine Vorrichtung mit einer formflexiblen Unterlage es ermöglicht, gekrümmte Glasscheiben zu einer gekrümmten Verbundglasscheibe fehlersicher und wirtschaftlich vorteilhaft miteinander zu verbinden. Die Vorrichtung dient zur Herstellung einer konvex und/oder konkav gekrümmten Verbundglasscheibe, die insbesondere im Vakuumverfahren mit Überdruck von oben gefertigt werden kann. Es ist insbesondere nicht erforderlich, dass die Ist-Kontur der gekrümmten Glasscheibe a priori feststeht. Druck, der während des Herstellens der gekrümmten Verbundglasscheibe auf die gekrümmte Glasscheibe aufgebracht wird, kann durch insbesondere flächiges, insbesondere vollflächiges, Aufliegen auf der formflexiblen Unterlage abgestützt werden. Das Risiko von Glasbruch bei der Herstellung der gekrümmten Verbundglasscheibe ist reduziert und insbesondere ausgeschlossen. Durch die Verwendung der erfindungsgemäßen Vorrichtung ist es möglich, zur Herstellung einer gekrümmten Verbundglasscheibe Produktionsglas zu verwenden. Die Toleranzanforderungen an die gekrümmten Glasscheiben sind reduziert. Insbesondere können Toleranzabweichungen an den Konturen der gekrümmten Glasscheiben von bis zu 1%, insbesondere bis zu 2%, insbesondere bis zu 5% und insbesondere bis zu 10% bezogen auf die Dicke der gekrümmten Glasscheibe akzeptiert werden, ohne dass die Gefahr von Glasbruch besteht.

Insbesondere ist es nicht erforderlich, dass die miteinander zu verbindenden gekrümmten Glasscheiben ideal aufeinander abgestimmte Konturen aufweisen. Abweichungen der Konturen sind akzeptabel. Die formflexible Unterlage gewährleistet eine individuelle Anpassung der Unterlagenkontur an die tatsächliche Ist-Kontur der Glasscheibe.

Eine gekrümmte Verbundglasscheibe kann insbesondere als Front-, Seiten- oder Heckscheibe im Automobil eingesetzt werden. Mit der erfindungsgemäßen Vorrichtung ist eine wirtschaftliche Herstellung der gekrümmten Verbundglasscheibe möglich.

Insbesondere kann die Vorrichtung derart ausgeführt sein, dass mehrere gekrümmte Verbundglasscheiben gleichzeitig hergestellt werden. Insbesondere werden die gekrümmten Verbundglasschreiben nebeneinander in der Vorrichtung angeordnet und parallel hergestellt. Die Vorrichtung kann tischförmig ausgeführt sein, auf dem die formflexible Unterlage aufgelegt oder integriert ist. Der Tisch kann einen umlaufenden Rahmen aufweisen, der insbesondere die formflexible Unterlage seitlich begrenzt. Der Rahmen kann insbesondere eine innere Unterteilung aufweisen, sodass jede einzelne Verbundglasscheibe in einem separat abgeteilten Bereich innerhalb des Rahmens auf der formflexiblen Unterlage des Tischs angeordnet sein kann. Auf die innere Unterteilung kann auch verzichtet werden.

Mit einer derartigen Vorrichtung können mehrere, insbesondere mindestens drei, insbesondere mindestens fünf, insbesondere mindestens zehn und insbesondere mindestens 20 oder mehr gekrümmte Verbundglasscheiben parallel hergestellt werden. Die Wirtschaftlichkeit der Herstellung ist dadurch zusätzlich erhöht.

Eine formflexible Unterlage gemäß Anspruch 2 ermöglicht eine vollflächige Abstützung der gekrümmten Glasscheibe. Die Unterlage umfasst, insbesondere flexibles, Kunststoff-Material, insbesondere Silikon-Material, das bei erhöhter Temperatur, insbesondere in einem Temperaturbereich von 100 °C bis 160 °C formstabil ist. Das Kunststoff-Material weist insbesondere thermisch aktives Zusatzmaterial auf, das eine hohe Wärmeleitfähigkeit aufweist.

Das Kunststoff-Material kann auch als 2-Komponenten-Material ausgeführt sein, das formflexibel und formstabil ausgeführt ist, um die Kontur der gekrümmten Glasscheibe abzubilden und während der Herstellung der Verbundglasscheibe abzustützen.

In einem vorgelagerten Verfahrensschritt kann die gekrümmte Glasscheibe in die erwärmte formflexible Unterlage aus Kunststoff-Material gedrückt werden, wobei sich das, insbesondere auf 130 °C bis 150 °C, erwärmte, deformierbare Kunststoff-Material an die tatsächliche Ist-Kontur der gekrümmten Glasscheibe ideal anpasst. Anschließend kann das Kunststoff-Material nach Erkalten als stabile Unterlage für die Herstellung der gekrümmten Verbundglasscheibe dienen. Mit der formflexiblen Unterlage aus Kunststoff-Material wird eine individuelle Form zum flächigen Abstützen der gekrümmten Glasscheibe bereitgestellt. Das flexible, thermisch veränderbare Kunststoff-Material ist insbesondere reversibel. Für einen nachfolgenden Herstellprozess kann die formflexible Unterlage an eine weitere Ist-Kontur einer neuen Glasscheibe angepasst werden.

Eine formflexible Unterlage gemäß Anspruch 3 ist unkompliziert herstellbar und unkompliziert anwendbar. Die flächige Abstützung der gekrümmten Glasscheibe erfolgt über eine Vielzahl von Formkörpern, die jeweils eine im Wesentlichen punktförmige Abstützung ermöglichen. Dadurch, dass die Formkörper relativ zueinander beweglich angeordnet sind, können sich die Formkörper an die reale Ist-Kontur der gekrümmten Glasscheibe anlegen. Die Formkörper liegen als lose Schüttung vor. Dadurch ist die Beweglichkeit der einzelnen Formkörper, insbesondere relativ zueinander, verbessert. Die Formkörper sind insbesondere kugelförmig und sind insbesondere aus einem Material mit guter Wärmeleitfähigkeit wie Metall oder Kunststoff hergestellt. Die Wärmeleitfähigkeit des Materials für den Formkörper beträgt mindestens 1 W/(m · K), insbesondere mindestens 10 W/(m · K), insbesondere mindestens 20 W/(m · K), insbesondere mindestens 40 W/(m · K), insbesondere mindestens 50 W/(m · K) und insbesondere mindestens 100 W/(m · K). Vorteilhaft ist, wenn die Formkörper in Folge der Druckaufbringung während der Herstellung der gekrümmten Verbundglasscheibe formstabil bleiben, also die individuelle Form des Formkörpers sich nicht verändert. Die einzelnen Formkörper sind in sich formstabil. Eine Deformation der Formkörper an sich ist ausgeschlossen.

Die Anordnung der Formkörper gemäß Anspruch 4 ermöglicht eine vorteilhafte, unkomplizierte Handhabung und Ausführung der Vorrichtung. Ein Rahmen ist insbesondere dann vorteilhaft, wenn die Formkörper als lose Schüttung vorgesehen sind.

Eine Vorrichtung gemäß Anspruch 5 gewährleistet eine zuverlässige und flächige Abstützung der Glasscheibe insbesondere in Krümmungsbereichen. Ein kritischer Maximal-Durchmesser ist insbesondere derart festgelegt, dass die Ist-Kontur der abzustützenden Glasscheibe durch die Formkörper zuverlässig abgestützt werden kann. Insbesondere ist eine Mindest-Dichte an Abstützstellen der Ist-Kontur der gekrümmten Glasscheibe an den Formkörpern erforderlich, die insbesondere mindestens 20, insbesondere mindestens 100, insbesondere mindestens 200, insbesondere mindestens 500, insbesondere mindestens 1.000 und insbesondere mindestens 10.000 beträgt.

Das Risiko von Glasbruch ist weiter reduziert. Insbesondere ist der mittlere Teilchendurchmesser der Formkörper kleiner als 10 % eines minimalen Krümmungsradius der gekrümmten Glasscheibe, insbesondere kleiner als 10 % eines minimal zulässigen Krümmungsradius der gekrümmten Glasscheibe. Insbesondere ist der Teilchendurchmesser der Formkörper höchstens 10 mm, insbesondere höchstens 5 mm, insbesondere höchstens 3 mm, insbesondere höchstens 1 mm und insbesondere höchstens 0,1 mm.

Es ist eine weitere Aufgabe der vorliegenden Erfindung, eine, insbesondere gekrümmte, Verbundglasscheibe bereitzustellen, die unaufwändig herstellbar ist und insbesondere verbesserte optische Eigenschaften und insbesondere verbesserte Sicherheitseigenschaften aufweist.

Diese Aufgabe ist erfindungsgemäß gelöst durch eine, insbesondere gekrümmte, Verbundglasscheibe mit den im Anspruch 6 angegebenen Merkmalen. Die erfindungsgemäße Verbundglasscheibe kann auch eben, insbesondere ohne Krümmung, ausgeführt sein. Die erfindungsgemäße Verbundglasscheibe weist insbesondere eine Scheibendicke von 5 mm bis 100 mm, insbesondere von 8 mm bis 80 mm, insbesondere von 10 mm bis 50 mm, insbesondere von 12 mm bis 40 mm und insbesondere von 15 mm bis 25 mm auf. Das Flächengewicht der erfindungsgemäßen Verbundglasscheibe beträgt von 5 kg/m² bis 200 kg/m², insbesondere von 10 kg/m² bis 180 kg/m², insbesondere von 20 kg/m² bis 150 kg/m² und insbesondere von 50 kg/m² bis 100 kg/m².

Erfindungsgemäß wurde erkannt, dass bei einer, insbesondere gekrümmten, Verbundglasscheibe zwischen einer ersten, insbesondere gekrümmten, Glasscheibe und einer zweiten, insbesondere gekrümmten, Glasscheibe eine Ausgleichsschicht angeordnet ist. Die Ausgleichsschicht gewährleistet einen Ausgleich von Abweichungen in den benachbarten Konturen der ersten Glasscheibe und der zweiten Glasscheibe. Die Abweichungen in den benachbarten Konturen können beispielsweise aus unterschiedlichen, insbesondere produktionsbedingten, Formungen der einzelnen Glasscheiben stammen. Es ist entbehrlich, dass die miteinander zu verbindenden, insbesondere jeweils gekrümmten Glasscheiben ideal aufeinander abgestimmte Konturen aufweisen. Die Bereitstellung der, insbesondere gekrümmten, Glasscheiben für die Herstellung der, insbesondere gekrümmten, Verbundglasscheibe ist reduziert. Der Vorbereitungsaufwand bei der Herstellung ist reduziert. Das Risiko von Glasbruch ist reduziert.

Eine gekrümmte Glasscheibe ist uneben ausgeführt und weist mindestens einen Krümmungsradius auf. Die Oberfläche der gekrümmten Glasscheibe ist zumindest bereichsweise konvex und/oder konkav ausgeführt. Die gekrümmte Glasscheibe ist insbesondere Autoglas, also für die Anwendung im Automobil vorgesehen. Alternative Anwendungsbereiche der gekrümmten Glasscheibe sind für Boote, Nutzfahrzeuge, in der Medizintechnik und bei Werkzeugmaschinen. Die Ausgleichsschicht dient insbesondere auch zum Verbinden, insbesondere zum Verkleben, der beiden gekrümmten Glasscheiben.

Insbesondere ist die Ausgleichsschicht frei von weichgemachtem Polyvinylbutyral (PVB). PVB ist kälteempfindlich und insbesondere bei Temperaturen von 0 °C oder weniger versprödet PVB, sodass der Einsatz von PVB nachteilig ist. Die gekrümmte Verbundglasscheibe ist insbesondere PVB-frei.

Die konvex und/oder konkav gekrümmten Glasscheiben weisen insbesondere eine Scheibendicke auf, die zwischen 0,5 mm und 15 mm, insbesondere 0,9 mm und 8 mm, insbesondere zwischen 1,5 mm und 5 mm, liegen kann.

Eine gekrümmte Verbundglasscheibe gemäß Anspruch 7 oder 8 ermöglicht eine Anpassung der Anforderungen, insbesondere erhöhter Sicherheitsanforderungen an die Verbundglasscheibe. Durch zusätzliche Lagen und gekrümmte Glasscheiben kann das Risiko einer Zerstörung der gekrümmten Verbundglasscheibe reduziert werden. Dadurch weist die Verbundglasscheibe verbesserte einbruch-, durchbruch- und durchschusshemmende sowie schallisolierende Eigenschaften auf.

Eine Verbundglasscheibe gemäß Anspruch 9 weist eine verbesserte Durchschusshemmung auf. An der der Ausgleichsschicht abgewandten Seite der ersten Glasscheibe ist dazu eine Schutzfolie angebracht. Die Schutzfolie ist insbesondere eine Sicherheitsfolie. Die Schutzfolie ist insbesondere mittels eines Klebstoffes, insbesondere auf Acrylatbasis, an der ersten Glasscheibe angeklebt. Die Verklebung der Schutzfolie an der ersten Glasscheibe kann auch mittels einer Klebeschicht, insbesondere in Form einer EVA-Folie erfolgen. Die Anbringung der Sicherheitsfolie ist dadurch vereinfacht und insbesondere unkompliziert in den Produktionsprozess der Verbundglasscheibe integrierbar. Bei der Verwendung einer EVA-Folie als Klebeschicht kann auf einen Klebstoff auf Acrylatbasis verzichtet werden. Die Schutzfolie ist insbesondere an einer Innenseite der Verbundglasscheibe angeordnet. Die Schutzfolie ist insbesondere der Raumseite der Verbundglasscheibe zugewandt. Die Schutzfolie kann eine Schichtdicke von 0,1 mm bis 2 mm, insbesondere zwischen 0,2 mm und 1,0 mm und insbesondere 0,3 mm und 0,8 mm betragen. Die Schutzfolie kann eine gehärtete Oberfläche aufweisen, die der Raumseite zugewandt ist. Die Schutzfolie ist insbesondere ein Mehrschichtlaminat aus einzelnen, miteinander verklebten Folien. Die Einzelfolien der Schutzfolie sind mittels eines Klebers auf Acrylatbasis miteinander verklebt. Die Schutzfolie kann klarsichtig, mattiert, insbesondere weiß mattiert oder mit einer Solartönung ausgeführt sein. Die Schutzfolie bietet insbesondere wirksamen Schutz gegen Wurfgeschosse, Spreng- und Brandsätze sowie Blitzeinbrüche. Die Schutzfolie weist einen g-Wert zwischen 0,2 und 0,9 auf, insbesondere zwischen 0,35 und 0,8 und insbesondere zwischen 0,5 und 0,7. Eine Verbundglasscheibe mit der Schutzfolie erfüllt die Widerstandsklasse A1 nach DIN 52290 (durchwurfhemmend) und P5A nach EN 356. Die Einzelfolien der Schutzfolie sind insbesondere Polyethylenterephtalatfolien und/oder Polyesterfolien.

Eine Ausführung der Schutzfolie gemäß Anspruch 10 ermöglicht eine besonders dünnlagige Ausführung der Durchschusshemmung. Die Schutzfolie ist insbesondere aus einem Kunststoffmaterial ausgeführt, das insbesondere Polyethylenterephthalat (PET) aufweist. Die Schutzfolie ist insbesondere ein mehrlagiger Verbund aus bis zu sieben Lagen aus PET, wobei jeweils zwei benachbarte PET-Lagen mit einem dazwischen angeordneten Klebstoff auf Acrylatbasis, insbesondere einem Acrylatkleber, verklebt sind. Die außenliegende PET-Lage ist insbesondere mit einer Hart-Beschichtung beschichtet. Die Hart-Beschichtung ist kratzfest und abriebbeständig ausgeführt. Die Hart-Beschichtung ist insbesondere auf Basis eines Polyorganosiloxans ausgeführt. Die Hart-Beschichtung ist insbesondere ein Material auf Acrylatbasis, insbesondere ein Acrylat, das unter UV-Strahlung mit Licht in einem Wellenlängenbereich zwischen 10 nm und 380 nm aushärtet. Die Hart-Beschichtung weist eine Schichtdicke zwischen 1 µm und 10 µm auf. Die Hart-Beschichtung kann auch als Glasfolie ausgeführt sein mit einer Schichtdicke von weniger als 1,0 mm.

Die Lagendicke der Schutzfolie beträgt insbesondere weniger als 1,0 mm und insbesondere höchstens 0,1 mm.

Eine Verbundglasscheibe gemäß Anspruch 11 ist unkompliziert und kosteneffizient herstellbar. Die, insbesondere gekrümmten, Glasscheiben können als Halbzeug in Form von Einscheibensicherheitsglas (ESG), als Flachglas, das im Floatglasverfahren hergestellt wurde, sogenanntes Floatglas, oder als teilvorgespanntes Glas (TVG) bereitgestellt werden.

ESG besteht insbesondere aus einer einzigen, insbesondere speziell wärmebehandelten Glasscheibe, die insbesondere nach EN 12150-1 gefertigt werden kann. Dazu wird das Glas während der Verarbeitung auf Temperaturen oberhalb seiner Transformationstemperatur erhitzt und danach schlagartig wieder abgekühlt, also abgeschreckt. Dabei erkalten die oberflächennahen Zonen des Glases schneller als der innere Kern. Im Ergebnis entsteht im Kern eine Zugspannung und an der Oberfläche eine Druckspannung. Das Einscheibensicherheitsglas ist, insbesondere thermisch, vorgespannt. ESG weist eine erhöhte Stoß- und Schlagfestigkeit auf, insbesondere höher als unbehandeltes Flachglas. ESG ist unempfindlich gegenüber Temperaturschwankungen. Die Temperaturwechselbeständigkeit von ESG beträgt 200 K.

Die dem ESG zugrundeliegende Wärmebehandlung ist unkompliziert und kosteneffizient durchführbar. Insbesondere ist ein Verfahren zum chemischen Vorspannen der Glasscheibe gemäß der WO 2018/095 693 A1 entbehrlich.

Das Einscheibensicherheitsglas kann zusätzlich einem Heißlagerungstest unterzogen werden, um das Risiko von Spontanbruch zu vermeiden. So hergestelltes Glas wird als ESG-H-Glas bezeichnet. Zusätzlich können die, insbesondere gekrümmten, Glasscheiben mit sicht- und/oder digital verdunkelten Gläsern ausgestattet sein. Die Glasscheiben können auch zumindest bereichsweise mit Lack beschichtet sein. Die Glasscheiben können als Halbzeug in großen Mengen kosteneffizient vorgefertigt werden.

Die Weiterverarbeitung des Einscheibensicherheitsglases zu der Verbundglasscheibe ist wirtschaftlich vorteilhaft. Insbesondere ist mindestens eine der Glasscheiben mit einer Vorspannung belastet, sodass bei einer äußeren Krafteinwirkung auf die Glasscheibe, das Einscheibensicherheitsglas in eine Vielzahl von Einzel-Splittern zerfällt. Ein derart vorgespanntes Einscheibensicherheitsglas wird auch als Krümelglas bezeichnet.

Überraschend wurde gefunden, dass eine Verbundglasscheibe, bei der Glasscheiben jeweils als Einscheibensicherheitsglas (ESG) ausgeführt sind, besonders widerstandsfähig ist. Die bislang in der Fachwelt vertretene Auffassung, wonach Einscheibensicherheitsglas wegen des charakteristischen Splitterverhaltens bei äußerer Krafteinwirkung lediglich eine reduzierte Widerstandsfähigkeit aufweise und sich damit nicht für die Verwendung einer mehrlagigen Verbundglasscheibe eigne, konnte widerlegt werden. In dem Verbund mehrerer Glasscheiben aus Einscheibensicherheitsglas mit dazwischen angeordneten Folien ist eine erhöhte Widerstandskraft möglich.

Die Verbundglasscheibe gemäß Anspruch 11 ist als Sicherheitsglas geeignet, insbesondere als Fensterscheibe im Automobilbereich.

Insbesondere besteht die Verbundglasscheibe ausschließlich aus Glasscheiben aus ESG. Scheiben anderer Materialien, insbesondere andersartige Glasscheiben und/oder Kunststoffscheiben sind entbehrlich. Die Verbundglasscheibe ist insbesondere sortenrein.

Eine Ausgleichsschicht gemäß Anspruch 12 ermöglicht eine zuverlässige Verbindung der Glasscheiben miteinander. Die Ausgleichsschicht weist verbesserte Hafteigenschaften auf. Die Klebeverbindung zwischen den Glasscheiben ist verbessert. Die Ausgleichsschicht ist insbesondere als mehrlagiger Folienverbund ausgeführt, wobei insbesondere mindestens eine und bis zu sieben Kunststofffolien vorgesehen sind. Jede Folie weist insbesondere eine Foliendicke von mindestens 0,5 mm, insbesondere 0,76 mm und insbesondere bis zu 1,0 mm auf. Insbesondere weist die Ausgleichsschicht eine Schichtdicke von 0,76 mm bis 8 mm, insbesondere von 2,0 mm bis 8,0 mm, insbesondere von 2,5 mm bis 4 mm und insbesondere von 3,0 mm bis 3,5 mm auf. Dadurch, dass die Ausgleichsschicht Konturabweichungen zwischen der ersten gekrümmten Glasscheibe und der zweiten gekrümmten Glasscheibe ausgleicht, ist die Schichtdicke der Ausgleichsschicht zwischen den Glasscheiben nicht zwingend konstant. Die Schichtdicke der Ausgleichsschicht kann unterschiedlich dick ausgeführt sein.

Vorteilhaft ist, wenn die Ausgleichsschicht aus einem thermoplastischen Kunststoffmaterial ausgeführt ist, insbesondere aus Ionoplastschichten, insbesondere in einer Ausführung mit sicht- und/oder digital verdunkelten Folien und/oder Folien mit elektrochromen Schichten, mit getönten oder metallisierenden oder Keramikschichten. Ionoplast-Material weist Ionomer auf. Zur Herstellung von Ionomeren wird beispielsweise ein Monomer wie Ethylen mit Acrylsäure oder Metacrylsäure kopolimerisiert, wodurch Carboxygruppen an die Polymerkette gelagert werden. Durch Zugabe von alkalischen Metallhydroxiden, insbesondere Zink- oder Natriumhydroxid, bildet sich Wasser unter Abspaltung von Wassermolekülen an einigen Carboxygruppen und es entstehen negativ geladene Sauerstoffmoleküle (Anionen). Die übriggebliebenen zweifach positiv geladenen Metallionen (Kationen) gehen eine Ionenbindung ein und bilden dadurch Salze zwischen den Makromolekülen. Die Ionenbindung ist thermoreversibel, wodurch Ionomere jederzeit wieder schmelzbar sind. Bezüglich der Zusammensetzung sind Ionomere den Polyolefinen zuzuordnen. Das Ionomer kann einen UV-Absorber aufweisen. Weitere Additive wie Weichmacher und/oder Haftvermittler werden nicht zugesetzt.

Das Kunststoffmaterial kann auch Polyethylenterephthalat (PET) aufweisen. Besonders vorteilhaft ist es, wenn die Ausgleichsschicht und insbesondere die Verbundglasscheibe insgesamt, Polycarbonat (PC)-frei ausgeführt ist. Es wurde gefunden, dass Polycarbonat aufgrund der unterschiedlichen Wärmeausdehnungskoeffizienten von Glas und Polycarbonat ursächlich für eine Delamination des Glasaufbaus sein kann. Das Risiko einer Delamination kann durch die Ausgleichsschicht reduziert werden. Eine Delamination ist durch die PC-freie Ausführung der Ausgleichsschicht vermieden.

Eine Verbundglasscheibe in Form von Stufenglas gemäß Anspruch 13 ermöglicht eine vorteilhafte Nutzung im Automobilbereich. Stufenglas bedeutet, dass zumindest in einem Randbereich der Verbundglasscheibe eine reduzierte Scheibendicke vorgesehen ist. Die reduzierte Scheibendicke beträgt beispielsweise zwischen 3 mm und 6 mm. Insbesondere entspricht die reduzierte Scheibendicke im Randbereich im Wesentlichen einer Nutbreite einer Glasscheibenaufnahme, in der die Verbundglasscheibe gehalten ist. Insbesondere ist die als Stufenglas ausgeführte Verbundglasscheibe in einer Kraftfahrzeugtür versenkbar, also höhenverlagerbar, angeordnet. In seitlichen Nuten der Kraftfahrzeugtür ist die Verbundglasscheibe zuverlässig geführt. Die reduzierte Schichtdicke im Randbereich der Verbundglasscheibe wird insbesondere dadurch erreicht, dass im Randbereich weniger Glasscheiben vorgesehen sind, insbesondere nur eine einzige Glasscheibe. In dem Randbereich mit reduzierter Scheibendicke ist insbesondere die zweite Glasscheibe ausgespart. In einem mittleren Bereich ist die Verbundglasscheibe mit der zweiten Glasscheibe und gegebenenfalls weiteren Glasscheiben verstärkt, also aufgedoppelt. Ein Randabstand beträgt insbesondere mehrere mm, insbesondere zwischen 1 mm und 20 mm, insbesondere zwischen 2 mm und 15 mm, insbesondere zwischen 2,5 mm und 10 mm, insbesondere zwischen 4 mm und 8 mm und insbesondere zwischen 5 mm und 6 mm.

Eine Verbundglasscheibe gemäß Anspruch 14 erweckt bei einem Endverbraucher einen ästhetisch ansprechenden Gesamteindruck. Die Sichtschutzbeschichtung ist insbesondere in schwarzer Farbe ausgeführt und insbesondere mittels eines Siebdruckverfahrens auf die Verbundglasscheibe aufgebracht. Die Sichtschutzbeschichtung ist insbesondere in einem Randbereich der Verbundglasscheibe angeordnet und verhindert den Blick des Endverbrauchers durch die Verbundglasscheibe auf die umlaufende Außenkante.

Ein Ausführungsbeispiel der Erfindung wird nachfolgend anhand der Zeichnung näher erläutert. In dieser zeigen:
- Fig. 1: eine schematische Querschnitt-Darstellung einer Vorrichtung mit einer formflexiblen Unterlage mit einer Vielzahl von Formkörpern,
- Fig. 2: eine Fig. 1 entsprechende Darstellung mit einer auf der form-flexiblen Unterlage angeordneten gekrümmten Glasscheibe,
- Fig. 3: eine schematische Querschnitt-Darstellung einer Verbund-glasscheibe gemäß der Erfindung,
- Fig. 4: eine schematische Seitenansicht einer Verbundglasscheibe gemäß einer weiteren Ausführungsform,
- Fig. 5: eine Schnittdarstellung gemäß Schnittlinie V-V in Fig. 4.

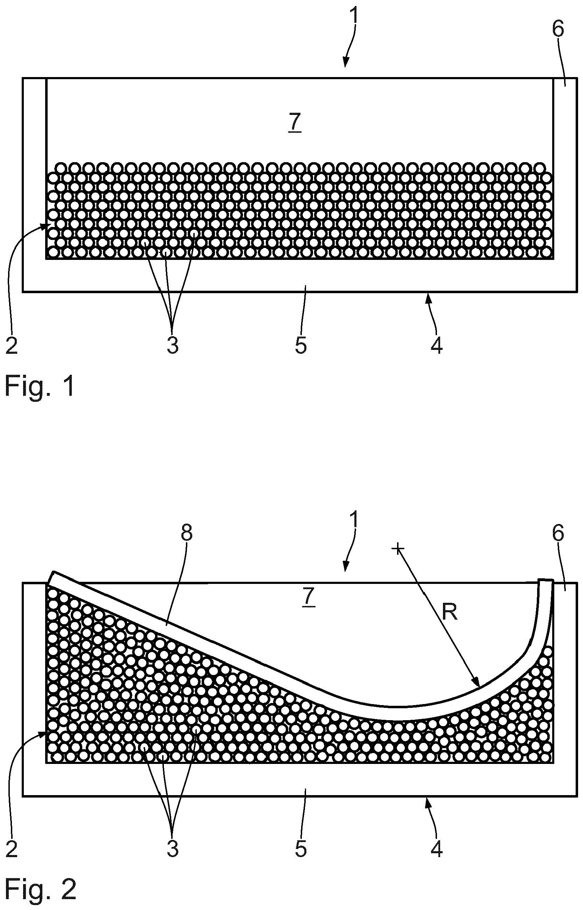

Eine in Fig. 1 und 2 dargestellte Vorrichtung 1 ermöglicht ein verbessertes Herstellen einer gekrümmten Verbundglasscheibe. Die Vorrichtung 1 kann auch zur Herstellung einer eben ausgeführten Verbundglasscheibe verwendet werden. Besonders vorteilhaft bei der Herstellung der Verbundglasscheibe bei Unterdruck, insbesondere Vakuum, ist wenn eine Abdeckfolie eingesetzt wird, die das Vakuum sicherstellen kann.

Die Vorrichtung 1 weist keinen höheren Rahmen auf als die Kante der unteren Glasscheibe. Die Vorrichtung 1 weist eine formflexible Unterlage 2 auf, die gemäß dem gezeigten Ausführungsbeispiel aus einer Vielzahl von Formkörpern 3 gebildet ist. Die formflexible Unterlage 2 ist in einem Rahmen 4 angeordnet. Der Rahmen 4 weist eine Bodenwand 5 und eine damit verbundene Seitenwand 6 auf. Die Bodenwand 5 kann eine kreisförmige Kontur, eckige Kontur, eine exakt der Verbundglasscheibe entsprechende Kontur oder eine davon abweichende Kontur aufweisen. Die Seitenwand 6 ist entlang der Kontur der Bodenwand 5 oder der Verbundglasscheibe geführt. Die Höhe der Seitenwand 6 erstreckt sich bis zur Unterseite des Glasaufbaus, also der Verbundglasscheibe im noch nicht verbundenen Ausgangszustand. Der Rahmen 4 begrenzt einen nach oben geöffneten Innenraum 7. In dem Innenraum sind die Formkörper 3 zuverlässig angeordnet. Die Formkörper bilden eine lose Schüttung. Es kann eine nicht dargestellte Trennschicht zur Glasscheibe 8 vorgesehen sein, die die Formkörper der losen Schüttung zusammenhält, also verhindert, dass die Formkörper unbeabsichtigt sich voneinander entfernen. Die Trennschicht bildet eine Hülle, in der die Formkörper 3 angeordnet sind. Die Hülle kann derart flexibel ausgeführt sein, dass sie sich an die Kontur der gebogenen Glasscheibe 8 anpasst. Die Formkörper 3 liegen lose aneinander an. Die Formkörper 3 sind miteinander unverbunden. Die Formkörper 3 sind relativ zueinander beweglich in dem Rahmen 4 angeordnet.

Gemäß dem gezeigten Ausführungsbeispiel sind die Formkörper 3 als Metallkugeln ausgeführt. Es sind auch andere Geometrien und/oder andere Materialien für die Ausführung der Formkörper 3 denkbar. Gemäß dem gezeigten Ausführungsbeispiel sind alle Formkörper 3 identische ausgeführt. Es ist auch denkbar, Formkörper 3 unterschiedlicher Größe und/oder unterschiedlicher Geometrie und/oder unterschiedlicher Materialien zu verwenden. Wenn, wie in Fig. 2 dargestellt, eine zumindest bereichsweise konvex und/oder konkav gekrümmte Glasscheibe 8 auf die formflexible Unterlage 2 aufgelegt wird, werden die Formkörper 3 durch die gekrümmte Glasscheibe 8 verdrängt. Dies ist dadurch möglich, dass die Formkörper 3 relativ zueinander beweglich sind. Die gekrümmte Glasscheibe 8 weist einen Krümmungsradius R auf. Vorteilhaft ist, dass die Formkörper 3 einen mittleren Teilchendurchmesser aufweisen, der kleiner ist als 10 % des Krümmungsradius R der gekrümmten Glasscheibe 8. Dadurch ist sichergestellt, dass die gekrümmte Glasscheibe 8 insbesondere auch im Bereich der Krümmung zuverlässig durch die Formkörper 3 abgestützt ist. Die Formkörper 3 liegen an der Außenkontur der gekrümmten Glasscheibe 8 an. Durch jeden einzelnen, an der Außenkontur der gekrümmten Glasscheibe 8 anliegenden Formkörper 3 entsteht eine Vielfach-Punkt-Abstützung.

Zur Herstellung einer Verbundglasscheibe mit der Vorrichtung 1 dient insbesondere ein Verfahren, bei dem mehrere Glasscheiben 8 miteinander dadurch verbunden werden, dass auf die obere, der Vorrichtung 1 abgewandten Glasscheibe Druck ausgeübt wird, und von unten, insbesondere der unteren, an der Vorrichtung 1 aufliegenden Glasscheibe 8 Temperatur aufgebracht wird. Die einzelnen Glasscheiben 8 und mögliche Zwischenlagen werden durch Druck und Temperatureinwirkung miteinander dauerhaft verbunden.

Die formflexible Unterlage kann gemäß einem weiteren, nicht dargestellten Ausführungsbeispiel aus einem, insbesondere temperaturstabilen Kunststoffmaterial, insbesondere Silikon-Material, mit Thermo-Kugeln, die eine hohe Wärmeleitfähigkeit aufweisen, hergestellt sein. Bei der formunterstützenden Unterlage aus dem Kunststoff-Material kann der Rahmen entfallen.

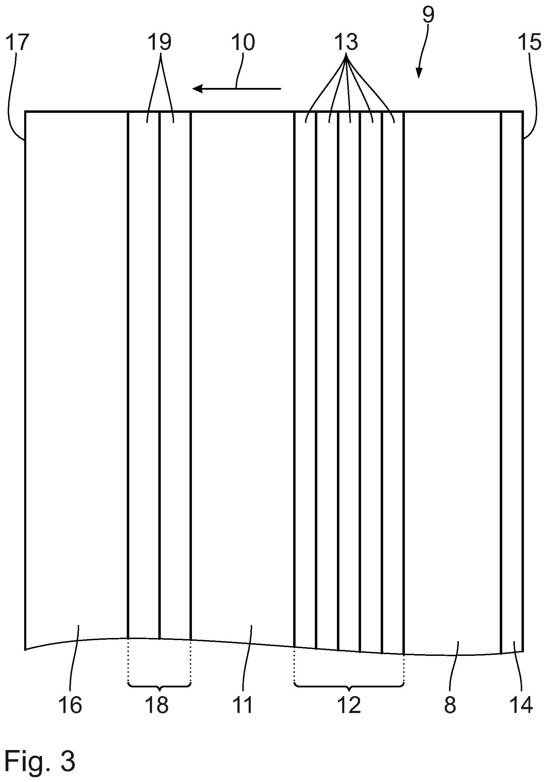

Eine in Fig. 3 gezeigte Verbundglasscheibe 9 ist schematisch vereinfacht dargestellt. Zur Erläuterung des Verbundaufbaus und der einzelnen Lagen und Schichten des Verbundes sind die einzelnen Lagen jeweils mit ideal konstanter Schichtdicke und idealisierten, exakt rechtwinkligen Kantenverläufen dargestellt. Es ist klar, dass insbesondere die Glasscheiben abgerundete Kanten aufweisen können. Die Glasscheiben können sich in ihrer Größe, also der in einer Raumrichtung von der gekrümmten Verbundglasscheibe 9 projizierten Fläche, unterscheiden. Derart unterschiedlich groß ausgeführte Glasscheiben können zur Herstellung von so genanntem Stufenglas dienen, bei dem die einzelnen, in einer Dickenrichtung beabstandet angeordneten Glasscheiben unterschiedliche Größen aufweisen.

Die Verbundglasscheibe 9 ist eine gekrümmte Verbundglasscheibe, wobei die Krümmung in Fig. 3 nicht dargestellt ist. Die gekrümmte Verbundglasscheibe 9 weist insbesondere mindestens eine gekrümmte Glasscheibe 8 auf, wie sie anhand der Vorrichtung 1 in Fig. 1 und 2 gezeigt ist. Fig. 3 zeigt einen vergrößerten Detailausschnitt eines Randbereichs der Verbundglasscheibe 9.

Im Folgenden werden die einzelnen Lagen und Schichten der Verbundglasscheibe 9 näher erläutert. Die einzelnen Lagen und Schichten sind entlang einer Dickenrichtung 10 der Verbundglasscheibe 9 hintereinander angeordnet. Die gekrümmte Verbundglasscheibe 9 wird insbesondere unter Verwendung der Vorrichtung 1 hergestellt.

Die gekrümmte Verbundglasscheibe 9 weist eine erste, innere gekrümmte Glasscheibe 8 und eine zweite gekrümmte Glasscheibe 11 auf. Zwischen der ersten gekrümmten Glasscheibe 8 und der zweiten gekrümmten Glasscheibe 11 ist bezogen auf die Dickenrichtung 10 eine Ausgleichsschicht 12 angeordnet. Durch die Ausgleichsschicht 12 sind die Glasscheiben 8, 11 zuverlässig miteinander verbunden, insbesondere miteinander verklebt.

Die Glasscheiben 8, 11 und die Ausgleichsschicht 12 sind in der schematischen Fig. 3 mit einer rechteckförmigen Querschnittsfläche dargestellt. Es handelt sich dabei um eine vereinfachte Darstellung. Insbesondere weisen die Glasscheiben 8, 11 und insbesondere auch die Ausgleichsschicht 12 abgerundete Ecken und/oder Kanten auf.

Die Ausgleichsschicht 12 ist aus mehreren, insbesondere fünf, Kunststofffolien 13 gebildet, die insbesondere Ionoplastschichten, insbesondere in einer Ausführung mit sicht- und/oder digital verdunkelten Folien und/oder Folien mit elektrochromen Schichten, mit getönten oder metallisierenden oder Keramikschichten, aufweisen. Die Kunststofffolien 13 weisen gemäß dem gezeigten Ausführungsbeispiel eine in Dickenrichtung 10 orientierte Foliendicke von 0,5 mm auf. Die Foliendicke kann auch größer als 0,5 mm oder kleiner als 0,5 mm sein. Es können auch mehr als fünf oder weniger als fünf Kunststofffolien 13 verwendet werden, um die Ausgleichsschicht 12 zu bilden. Die Ausgleichsschicht 12 weist eine in Dickenrichtung 10 orientierte Schichtdicke von etwa 2 mm bis 8 mm auf.

An einer der zweiten Glasscheibe 11 gegenüberliegenden Oberfläche ist an der ersten gekrümmten Glasscheibe 8 eine Schutzfolie 14 angeordnet. Die Schutzfolie 14 ist als Kunststofffolie, insbesondere aus einem mehrlagigen Laminat von Polyethylenterephthalat-Folien mit Trennschichten aus Acrylatkleber ausgeführt. Die Schutzfolie 14 weist eine Foliendicke von 0,1 mm bis 0,7 mm auf. Die Schutzfolie 14 dient zur Splitterbindung möglicher Glassplitter der ersten Glasscheibe 8 und somit zur Durchschusshemmung. Die Verbundglasscheibe 9 ist ein Sicherheitsglas.

Die Schutzfolie 14 ist an einer Innenseite 15 der Verbundglasscheibe 9 angeordnet.

An einer der ersten Glasscheibe 8 gegenüberliegenden Seite der zweiten Glasscheibe 11 ist eine dritte gekrümmte Glasscheibe 16 angeordnet. Die dritte Glasscheibe 16 bildet eine der Innenseite 15 gegenüberliegende Außenseite 17 der Verbundglasscheibe 9.

Die dritte Glasscheibe 16 ist mit der zweiten Glasscheibe 11 mittels einer Verbindungsschicht 18 verbunden, insbesondere verklebt. Die Verbindungsschicht 18 weist gemäß dem gezeigten Ausführungsbeispiel zwei, insbesondere identisch ausgeführte, Kunststofffolien 19 auf. Die Kunststofffolien 19 der Verbindungsschicht 18 weisen eine Foliendicke von mindestens 0,5 mm, insbesondere von 0,76 mm auf. Als Material für die Kunststofffolie 19 wird insbesondere dasselbe Material wie für die Kunststofffolie 13 verwendet.

Gemäß der Darstellung in Fig. 3 erstrecken sich die Kunststofffolien 13 der Ausgleichsschicht 12 und die Kunststofffolien 19 der Verbindungsschicht 18 jeweils bis zu einem in Fig. 3 oben dargestellten Randbereich der Glasscheiben 8, 11, 16. Die Ausgleichsschicht 12 und die Verbindungsschicht 18 sowie die Schutzfolie 14 an der Innenseite 15 sind jeweils kantenbündig an den Glasscheiben 8, 11, 16 angeordnet. Es ist denkbar, dass mindestens eine, mehrere oder sämtliche Kunststofffolien 13, 14, 19 bezüglich des äußeren Randbereichs mit einem Randabstand nach innen versetzt angeordnet sind. Ein derartiger Randabstand kann beispielsweise 1 cm betragen. Der Randabstand kann auch kleiner als 1 cm oder größer als 1 cm sein.

Vorteilhaft ist es, wenn eine, insbesondere außenliegend angeordnete, Kunststofffolie an einer Glasscheibe mit einer Randversiegelung ausgeführt ist, sodass ein unbeabsichtigtes Ablösen der Folie von der Glasscheibe verhindert und insbesondere ausgeschlossen ist.

Die Verbundglasscheibe 9 kann auch ohne die dritte Glasscheibe 16 und ohne die Verbindungsschicht 18 ausgeführt sein. Die Verbundglasscheibe 9 kann auch bis zu zehn einzelnen Glasscheiben wie die erste Glasscheibe 8, die zweite Glasscheibe 11 und die dritte Glasscheibe 16 und entsprechend vielen Zwischenschichten aus Kunststoffmaterial aufgebaut sein. Der konkrete Lagenverbund der Verbundglasscheibe 9, insbesondere Anzahl und Material der einzelnen Lagen, kann in Abhängigkeit der Sicherheitsanforderungen an die Verbundglasscheibe 9 entsprechend gewählt werden.

Es ist denkbar, dass zusätzliche gekrümmte Glasscheiben in der Verbundglasscheibe 9 vorgesehen sein können. Die zusätzlichen gekrümmten Glasscheiben dienen insbesondere zur Erhöhung der Durchschlagresistenz, insbesondere zur Verbesserung der Durchschusshemmung. Zusätzliche gekrümmte Glasscheiben können mit einer zusätzlichen Ausgleichsschicht 12 an einer der Innenseite 15 abgewandten Seite der zweiten Glasscheibe 11 angeordnet sein, wobei die Verbindungsschicht 18 mit der dritten Glasscheibe 16 zur Bildung der Außenseite 17 dient. Die Einfügung der zusätzlichen Glasscheiben erfolgt insbesondere zwischen der ersten gekrümmten Glasscheibe 8 und der dritten gekrümmten Glasscheibe 16.

Die Einfügung der zusätzlichen Glasscheiben kann auch an der Trennebene zwischen der Verbindungsschicht 18 und der dritten Glasscheibe 16 erfolgen.

Bei der Herstellung der Verbundglasscheibe 9 werden die Kunststofffolien 13 insbesondere in einem Temperaturbereich von mehr als 100 °C, insbesondere in einem Temperaturbereich von 110 °C bis 160 °C erweicht. Die Kunststofffolien 13 verkleben miteinander, insbesondere unmittelbar. Unebenheiten, die zwischen den einander zugewandten Konturen der ersten Glasscheibe 8 und der zweiten Glasscheibe 11 bzw. zwischen der zweiten Glasscheibe 11 und der dritten Glasscheibe 16 existieren, können durch die erweichten Kunststofffolien 13 bzw. 19 ausgeglichen werden. Zwischen den Glasscheiben 8, 11, 16 und den Kunststofffolien 13, 19 bzw. der Ausgleichsschicht 12 und/oder der Verbindungsschicht 18 existierende Luftpolster werden ausgeglichen und mit dem Material der Kunststofffolien 13 bzw. der Ausgleichsschicht 12 und/oder der Verbindungsschicht 18 gefüllt.

Vorteilhaft ist es, wenn bei diesem Prozessschritt zusätzlich ein Unterdruck anliegt, wobei der Unterdruck insbesondere höchstens 0,5 bar, insbesondere höchstens 0,4 bar, insbesondere höchstens 0,3 bar, insbesondere höchstens 0,2 bar und insbesondere höchstens 0,1 bar beträgt.

Der Unterdruck wird insbesondere im Bereich der formflexiblen Unterlage 2, also insbesondere unterhalb der Glasscheibe 8, angelegt. Zusätzlich oder alternativ ist ein Überdruck, der von oberhalb auf die Glasscheibe 8 einwirkt, vorteilhaft. Der Überdruck beträgt insbesondere mindestens 1,2 bar, insbesondere mindestens 1,5 bar, insbesondere 2 bar und insbesondere mindestens 3 bar.

Temperatur, Überdruck und Unterdruck können gleichzeitig auf die Glasscheibe 8 einwirken. Es ist auch denkbar, die Parameter Temperatur, Unterdruck und Überdruck beliebig zu kombinieren. Das Risiko von Glasbruch ist reduziert, insbesondere vermieden. Insbesondere ist es nicht erforderlich, dass Konturen der Glasscheiben 8 und 11 bzw. 11 und 16 ideal aufeinander abgestimmt sind. Konturabweichungen werden durch die Ausgleichsschicht 12 und/oder der Verbindungsschicht 18 ausgeglichen und sind deshalb tolerierbar.

Wesentlich ist, dass die entlang der Dickenrichtung 10 orientierte Schichtdicke der Ausgleichsschicht 12 und/oder der Verbindungsschicht 18 in der Ebene senkrecht zur Dickenrichtung 10 veränderlich ausgeführt sein kann. Durch die veränderliche Ausführung der Schichtdicke der Ausgleichsschicht 12 und/oder der Verbindungsschicht 18 ist die Anpassung von Konturunterschieden der ersten Glasscheibe 8 und der zweiten Glasscheibe 11 bzw. der zweiten Glasscheibe 11 und der dritten Glasscheibe 16 ermöglicht.

Die zeichnerische Trennung der Kunststofffolien 13 in Fig. 3 hat lediglich erläuternden Charakter. Insbesondere ist eine Unterscheidung der einzelnen Kunststofffolien 13 nach der Verbindung der ersten Glasscheibe 8 mit der zweiten Glasscheibe 11 nicht ohne weiteres erkennbar. Insbesondere ist es denkbar, dass die Ausgleichsschicht 12 eine homogene Ausgleichsschicht bildet, wobei Übergänge zwischen den einzelnen, ursprünglich vorhandenen Kunststofffolien 13 nicht mehr erkennbar und nicht mehr nachvollziehbar sind. Die Kunststofffolien 13 verschmelzen ineinander und bilden eine gemeinsame Einheit.

Gemäß dem gezeigten Ausführungsbeispiel sind die Glasscheiben 8, 11, 16 jeweils identisch ausgeführt mit einer Scheibendicke entlang der Dickenrichtung 10 von 3,0 mm. Die Scheibendicke beträgt insbesondere zwischen 0,9 mm und 8 mm. Die Glasscheiben können als Einscheibensicherheitsglas ausgeführt und insbesondere vorgespannt sein. Bei einer Beeinträchtigung der Glasscheiben 8, 11, 16 zersplittern diese in eine Vielzahl von Einzelsplittern. Die Glasscheiben 8, 11, 16 können als sogenanntes Krümelglas ausgeführt sein, aber auch als gehärtetes Glas in klarer Ausführung oder getönt.

Die Schutzfolie 14 ist mittels eines Klebstoffes auf Acrylatbasis an der gekrümmten Glasscheibe 8 vollflächig angeklebt.

Besonders vorteilhaft ist, dass die erfindungsgemäße Verbundglasscheibe 9 PVB- und/oder PC-frei ausgeführt ist. Die Verbundglasscheibe 9 ist thermisch robust. Das Risiko einer Delamination ist vermieden. Bei der Herstellung der erfindungsgemäßen Verbundglasscheibe 9 ist das Risiko von Glasbruch im Wesentlichen ausgeschlossen. Die Verbundglasscheibe 9 weist eine hohe optische Transparenz auf.

Der Transmissionskoeffizient der Verbundglasscheibe 9 ist primär abhängig von den verwandten Gläsern, also insbesondere den Glasscheiben 8, 11, 16, insbesondere deren jeweiliger Tönung. Optische Eigenschaften der Glasscheiben 8, 11, 16 können beispielsweise auch mittels eines Sputterverfahrens, das insbesondere als vorgelagerter Prozessschritt durchgeführt wird, erzeugt werden.

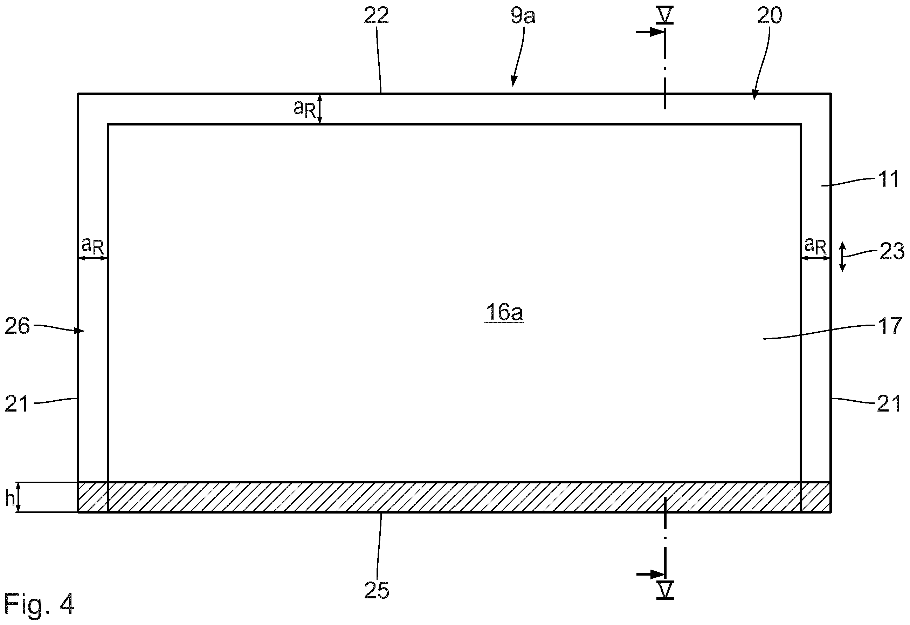

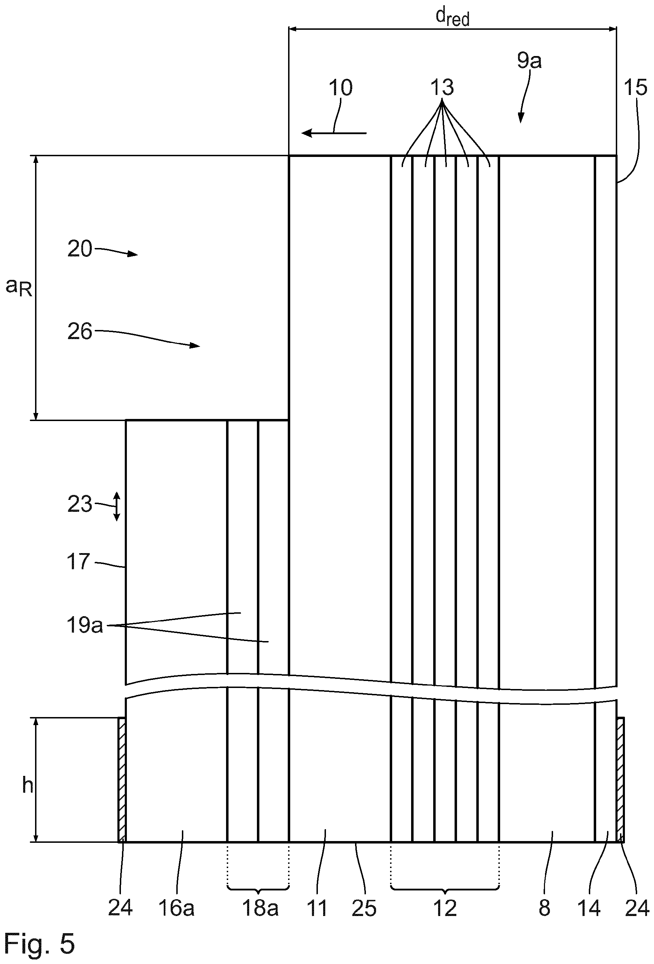

Im Folgenden wird unter Bezugnahme auf Fig. 4 und 5 eine weitere Ausführungsform der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem vorherigen Ausführungsbeispiel besteht darin, dass die Verbundglasscheibe 9a als Stufenglas ausgeführt ist. Das Stufenglas weist einen Randbereich 20 auf, in dem die Verbundglasscheibe 9a eine reduzierte Scheibendicke d_{red} aufweist, die gemäß dem gezeigten Ausführungsbeispiel zwischen 3 mm und 6 mm beträgt. Die reduzierte Scheibendicke d_{red} kann auch weniger als 3 mm oder mehr als 6 mm betragen.

Gemäß dem gezeigten Ausführungsbeispiel ist die Verbundglasscheibe 9a im Wesentlichen rechteckförmig ausgeführt. Der Randbereich 20 erstreckt sich entlang eines äußeren Umfangs der Verbundglasscheibe 9a. Gemäß dem gezeigten Ausführungsbeispiel erstreckt sich der Randbereich 20 im Wesentlichen U-förmig entlang des äußeren Umfangs der Verbundglasscheibe 9a, insbesondere entlang der beiden kürzeren Seitenkanten 21 der Rechteckkontur und einer, die beiden kürzeren Seitenkanten 21 verbindenden längeren Seitenkante 22.

Der Randbereich 20 kann sich auch entlang des gesamten Umfangs der Verbundglasscheibe 9a erstrecken. In Abhängigkeit des Anwendungszwecks für die Verbundglasscheibe 9 kann der Randbereich 20 auch bereichsweise, insbesondere in anderen Bereichen und insbesondere beliebig am äußeren Umfang der Verbundglasscheibe 9 ausgeführt sein. Es ist auch denkbar, dass mehrere Randbereichsabschnitte vorgesehen sind, die entlang des äußeren Umfangs der Verbundglasscheibe 9a voneinander getrennt ausgeführt sind, beispielsweise an zwei gegenüberliegenden Seitenkanten, insbesondere an den beiden kürzeren Seitenkanten 21.

Gemäß dem gezeigten Ausführungsbeispiel dient der Randbereich 20 mit der reduzierten Scheibendicke d_{red} zur Aufnahme in einer Führungsnut an einem Rahmen der Fahrzeugtür. Die Verbundglasscheibe 9 ist entlang der Höhenrichtung 23 in der Kraftfahrzeugtür versenkbar angeordnet. Die Höhenrichtung 23 ist insbesondere senkrecht zur Dickenrichtung 10 orientiert.

Der Randbereich 20 weist einen Randabstand a_{R} auf. Der Randabstand a_{R} entspricht der Breite des Randbereichs 20 in der Ebene der Verbundglasscheibe 9a. Gemäß dem gezeigten Ausführungsbeispiel ist der Randabstand a_{R} entlang des äußeren Umfangs der Verbundglasscheibe 9a konstant ausgeführt. Der Randabstand a_{R} ist jeweils senkrecht zu den äußeren Seitenkanten 21, 22 orientiert. Es ist denkbar, dass der äußere Randabstand a_{R} entlang des Umfangs der Verbundglasscheibe 9a veränderlich, insbesondere gestuft ausgeführt ist.

In dem Randbereich 20 ist die Verbundglasscheibe 9a ohne dritte Glasscheibe 16a und ohne die Verbindungsschicht 18a mit den beiden Kunststofffolien 19a ausgeführt. Dadurch weist die Verbundglasscheibe 9a in Dickenrichtung 10 eine Stufe 26 auf. Die Verbundglasscheibe 9a wird als Stufenglas bezeichnet. Gemäß dem gezeigten Ausführungsbeispiel ist die Verbundglasscheibe 9a einstufig ausgeführt.

Es ist auch denkbar, eine mehrstufige Ausführung vorzusehen, wobei ausgehend von einer Verbundglasscheibe 9a mit maximaler Scheibendicke entsprechend dem vorherigen Ausführungsbeispiel eine erste Stufe wie in Fig. 5 gezeigt vorgesehen sein kann. Eine weitere Stufe kann dadurch gebildet sein, dass zusätzlich zu der dritten Glasscheibe 16a und der Verbindungsschicht 18a auch die Ausgleichsschicht 12 und die zweite Glasscheibe 11 ausgespart sind.

Es ist auch denkbar, dass bei der einstufigen Ausführung gemäß Fig. 5 zusätzlich die zweite Glasscheibe 11 und die Ausgleichsschicht 12 ausgespart werden, um in dem Randbereich 20 eine zusätzlich reduzierte Schichtdicke d_{red} zu erreichen.

Gemäß dem gezeigten Ausführungsbeispiel ist die Verbundglasscheibe 9a im Wesentlichen eben, also ohne Krümmung ausgeführt. Die Verbundglasscheibe 9a kann eine Krümmung aufweisen, die sich insbesondere entlang einer Raumrichtung erstreckt. Es können auch mehrere Krümmungen vorgesehen sein, die sich entlang mehrerer Raumrichtungen erstrecken.

Ein weiterer Unterschied gegenüber der vorherigen Ausführungsform besteht darin, dass die Verbundglasscheibe 9a eine Sichtschutzbeschichtung 24 aufweist, die gemäß dem gezeigten Ausführungsbeispiel beidseitig, also an der Innenseite 15 und an der Außenseite 17 der Verbundglasscheibe 9a angebracht ist. Insbesondere ist die Sichtschutzbeschichtung 24 an der Innenseite 15 der Verbundglasscheibe 9a vorgesehen. Die Sichtschutzbeschichtung 24 ist mittels Siebdruck aufgebracht und schwarz gefärbt. Durch die Sichtschutzbeschichtung 24 ist einem Endnutzer der Blick beispielsweise von der Innenseite 15 durch das Innere der Verbundglasscheibe 9a auf eine untere Stirnseite 25 der Verbundglasscheibe 9a verwehrt.

Die untere Stirnseite 25 weist beispielsweise eine Bruchfläche auf, die einen unästhetischen Gesamteindruck der Verbundglasscheibe 9a hinterlassen würde. Dieser unästhetische Gesamteindruck ist durch die Sichtschutzbeschichtung 24 verhindert. Die Sichtschutzbeschichtung 24 weist entlang der Höhenrichtung 23 eine Höhe h auf, die gemäß dem gezeigten Ausführungsbeispiel etwa 5 mm beträgt. Die Höhe h kann je nach Anwendungsfall entsprechend festgelegt werden. Je größer die Schichtdicke d entlang der Dickenrichtung 10 der Verbundglasscheibe 9a, desto größer ist die Höhe h.

Gemäß dem gezeigten Ausführungsbeispiel erstreckt sich die Sichtschutzbeschichtung 24 ausschließlich entlang der längeren Seitenkante 22. Es ist auch denkbar, dass die Sichtschutzbeschichtung 24 nur bereichsweise entlang der längeren Seitenkante 22 aufgebracht ist. Es ist denkbar, zusätzliche Bereiche in der Verbundglasscheibe, insbesondere der Innenfläche 15 mit einer Sichtschutzbeschichtung 24 auszuführen.

## Patentansprüche

1. Vorrichtung (1) zum flächigen Abstützen einer gekrümmten Glasscheibe (8) beim Herstellen einer gekrümmten Verbundglasscheibe (9; 9a), wobei die Vorrichtung (1) eine formflexible Unterlage (2) aufweist, die an die gekrümmte Glasscheibe (8) individuell anpassbar ist.

2. Vorrichtung gemäß Anspruch 1, **dadurch gekennzeichnet, dass** die formflexible Unterlage (2) Kunststoff-Material, insbesondere Silikon-Material, aufweist.

3. Vorrichtung gemäß Anspruch 1, **dadurch gekennzeichnet, dass** die formflexible Unterlage (2) eine Vielzahl von Formkörpern (3) umfasst, wobei die Formkörper (3) relativ zueinander beweglich angeordnet sind.

4. Vorrichtung gemäß Anspruch 3, **dadurch gekennzeichnet, dass** die Formkörper (3) in einem Rahmen (4) angeordnet sind.

5. Vorrichtung gemäß Anspruch 3 oder 4, **dadurch gekennzeichnet, dass** die Formkörper (3) einen mittleren Teilchendurchmesser aufweisen, der kleiner ist als ein kritischer Maximal-Durchmesser.

6. Verbundglasscheibe (9; 9a), insbesondere hergestellt unter Verwendung einer Vorrichtung (1) gemäß einem der vorstehenden Ansprüche, wobei die Verbundglasscheibe (9; 9a) aufweist
- eine erste Glasscheibe (8) und eine zweite Glasscheibe (11),
- mindestens eine zwischen der ersten Glasscheibe (8) und der zweiten Glasscheibe (11) angeordnete Ausgleichsschicht (12).

7. Verbundglasscheibe (9; 9a) gemäß Anspruch 6, **gekennzeichnet durch** eine dritte Glasscheibe (16), die an der zweiten Glasscheibe (11) der ersten Glasscheibe (8) gegenüberliegend angeordnet ist, wobei insbesondere mindestens eine zwischen der zweiten Glasscheibe (11) und der dritten Glasscheibe (16) angeordnete Kunststofffolie (19) vorgesehen ist.

8. Verbundglasscheibe (9; 9a) gemäß Anspruch 7, **gekennzeichnet durch** eine vierte Glasscheibe, und insbesondere eine fünfte Glasscheibe, die zwischen der ersten Glasscheibe (8) und der zweiten Glasscheibe (11) und/oder zwischen der zweiten Glasscheibe (11) und der dritten Glasscheibe (16; 16a) angeordnet ist.

9. Verbundglasscheibe (9; 9a) gemäß einem der Ansprüche 6 bis 8, **dadurch gekennzeichnet, dass** eine Schutzfolie (14) an der der Ausgleichsschicht (12) abgewandten Seite der ersten Glasscheibe (8) angeordnet ist.

10. Verbundglasscheibe (9; 9a) gemäß Anspruch 9, **dadurch gekennzeichnet, dass** die Schutzfolie (14) Kunststoffmaterial aufweist, insbesondere PET.

11. Verbundglasscheibe (9; 9a) gemäß einem der Ansprüche 6 bis 10, **dadurch gekennzeichnet, dass** die Glasscheiben (8, 11, 16; 8, 11, 16a) als Einscheibensicherheitsglas ausgeführt sind.

12. Verbundglasscheibe (9; 9a) gemäß einem der Ansprüche 6 bis 11, **dadurch gekennzeichnet, dass** die Ausgleichsschicht (12) mehrere, insbesondere mindestens drei, insbesondere mindestens fünf, Kunststofffolien (13) aufweist, die jeweils eine Foliendicke von mindestens 0,5 mm aufweisen.

13. Verbundglasscheibe (9a) gemäß einem der Ansprüche 6 bis 12, **dadurch gekennzeichnet, dass** die Verbundglasscheibe (9a) als Stufenglas ausgeführt ist.

14. Verbundglasscheibe (9a) gemäß einem der Ansprüche 6 bis 13, **dadurch gekennzeichnet, dass** zumindest bereichsweise entlang des Umfangs der Verbundglasscheibe (9a) eine Sichtschutzbeschichtung (24) aufgebracht ist.
